(19) Europäisches Patentamt
European Patent Office
Office européen des brevets

(11) **EP 3 054 360 B1**

(12) **EUROPÄISCHE PATENTSCHRIFT**

(45) Veröffentlichungstag und Bekanntmachung des Hinweises auf die Patenterteilung:
**30.03.2022   Patentblatt 2022/13**

(21) Anmeldenummer: **15196480.6**

(22) Anmeldetag: **26.11.2015**

(51) Internationale Patentklassifikation (IPC):
**B65H 43/00** $^{(2006.01)}$     **B65H 39/02** $^{(2006.01)}$
**G05B 19/418** $^{(2006.01)}$

(52) Gemeinsame Patentklassifikation (CPC):
**B65H 39/02; B65H 43/00; G05B 19/4183;**
B65H 2301/4311; B65H 2553/52; B65H 2557/13;
B65H 2701/12422; B65H 2701/1244;
G05B 2219/23231; G05B 2219/31296;
G05B 2219/31304; G05B 2219/31309; Y02P 90/02

(54) **VERFAHREN ZUR HERSTELLUNG EINER PRODUKTZUSAMMENSTELLUNG**

METHOD FOR PRODUCING A PRODUCT COMPOSITION

PROCÉDÉ DE FABRICATION D'UNE COMPOSITION DE PRODUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014   CH 20182014**

(43) Veröffentlichungstag der Anmeldung:
**10.08.2016   Patentblatt 2016/32**

(73) Patentinhaber: **FERAG AG**
**8340 Hinwil (CH)**

(72) Erfinder: **Uwe, GROTH**
**8342 Wernetshausen (CH)**

(74) Vertreter: **IPrime Rentsch Kaelin AG**
**Hirschengraben 1**
**8001 Zürich (CH)**

(56) Entgegenhaltungen:
**EP-A1- 1 911 583     EP-A2- 2 333 627**
**WO-A1-01/80146     WO-A2-2006/130691**

## Beschreibung

## Technisches Gebiet

Die Erfindung bezieht sich auf ein Verfahren zur Herstellung einer Produktzusammenstellung welche mindestens ein Hauptprodukt und mindestens ein oder mehrere Teilprodukte umfasst.

## Stand der Technik

Produktzusammenstellungen werden, wie es in verschiedenen Schutzrechten der Anmelderin beschrieben ist, maschinell in grossen Auflagen hergestellt. Eine Produktzusammenstellung kann beispielsweise ein Druckprodukt mit verschiedenen Druckproduktbeilagen oder eine Kundentasche mit verschiedenen Kundenartikeln betreffen. Eine Auflage einer Produktzusammenstellung kann beispielsweise auf eine bestimmte Personengruppe abgestimmt sein. Beispielsweise werden Druckprodukte für Haushalte mit Haushaltwerbung versehen oder dieselben Druckprodukte für Industriebetriebe mit Industriewerbung versehen. Bei der maschinellen Herstellung von Produktzusammenstellungen sind entsprechende Steuerungsaufgaben auszuführen, um die Produktzusammenstellungen in der gewünschten Weise zu erhalten.

Aus der EP 1 911 583 ist ein Verfahren zur Herstellung eines Druckprodukts bekannt. In einem Hochleistungsdruckprozess hergestellte Druckprodukte werden mit einem Identifikationsmittel versehen, welches eine individualisierbare, produktspezifische Information umfasst. Es werden zumindest zwei nachgeschaltete Individualisierungsschritte durchgeführt. In den Identifikationsmitteln werden Steueranweisungen für die mindestens zwei weiteren Individualisierungsschritte eingebunden, so dass die Identifikationsmittel die Zuordnung der in den mindestens zwei weiteren nachgeschalteten Individualisierungsschritten zuzufügenden Information zum jeweiligen Produkt ermöglichen.

## Darstellung der Erfindung

Eine Aufgabe der Erfindung besteht darin, ein Verfahren zur Herstellung einer Produktzusammenstellung anzugeben, welches flexibler ist und leicht anpassbar ist.

Diese Aufgabe wird durch die Merkmale der unabhängigen Patentansprüche gelöst. Vorteilhafte Ausgestaltungen der erfindungsgemässen Lösung ergeben sich aus den abhängigen Ansprüchen.

Bei dem erfindungsgemässen Verfahren zur Herstellung einer Produktszusammenstellung, welche mindestens ein Hauptprodukt und mindestens ein oder mehrere Teilprodukte umfasst, wird zumindest das Hauptprodukt als führendes Objekt mit einem Identifikationsmittel versehen. Das Identifikationsmittel umfasst einen Prozessschlüssel, der wiederum mindestens einen Uniform Resource Identifier (URI) und einen Steuerelement-Bereich umfasst. Im Herstellungsprozess erkennt mindestens eine Maschine den Prozessschlüssel und mindestens ein Arbeitsschritt der Maschine wird vom Prozessschlüssel ausgelöst.

Gemäss einer weiteren Ausführungsform umfasst die Produktzusammenstellung ein Aufnahmebehälter, vorzugsweise eine Kundentasche, zur Aufnahme einer kundenspezifischen Produktzusammenstellung umfasst.

Vorzugsweise wird der mindestens eine Arbeitsschritt durch eine vom Steuerelement-Bereich zur Verfügung gestellte Steuerinformation ausgelöst und gemäss einer weiteren Ausführungsform von dieser auch gesteuert.

Dabei ist die Steuerinformation vorzugsweise im Steuerelement-Bereich des Prozessschlüssels abgespeichert oder sie wird entsprechend einer im SteuerelementBereich des Prozessschlüssels abgespeicherten Anweisung über ein Datennetzwerk aus mindestens einer Steuerinformationsdatenbank abgefragt.

Der Steuerelementbereich kann mindestens ein maschinenspezifisches Steuerelement mit einer Maschinenidentifikation und einer der Maschine zugeordneten Maschinensteueranweisung umfassen.

Alternativ dazu kann der Steuerelementbereich mindestens ein maschinenspezifisches Steuerelement mit einer Maschinenidentifikation und einer der Maschine zugeordneten Abfrageanweisung für eine Maschinensteueranweisung umfassen. Ein solcher Steuerelementbereich wird anders als der Vorgenannte einen Arbeitschritt einer Maschine nicht direkt mittels der zur Verfügung gestellten Steuerinformation auslösen und allenfalls steuern, sondern eine entsprechende Steueranweisung wird anhand einer im Steuerelement-Bereich des Prozessschlüssels abgespeicherten Anweisung über ein Datennetzwerk aus mindestens einer Steuerinformationsdatenbank abgefragt.

Die maschinenlesbaren Daten können vorteilhafter Weise aus der Gruppe von: i) direkt auf dem oder am Produkt angebrachte maschinenlesbare Daten und ii) dem Produkt lösbar, temporär und räumlich in unmittelbarer Nähe zugeordnete maschinenlesbare Daten ausgewählt sein.

Gemäss weiteren bevorzugten Ausführungsformen umfasst der Prozessschlüssel mindestens ein vorangestelltes Metatag (kurz MD) zur herstellerspezifischen Identifikation der weiteren Elemente des Prozessschlüssels. Es hat sich gezeigt, dass das Metatag es bei einer auf mehrere Hersteller verteilten Produktion sehr schnell und einfach ermöglicht die herstellerspezifischen weiteren Elemente des Prozessschlüssels zu identifizieren. Durch den Zugriff auf den Metatag kann eine Maschine eines Herstellers sehr rasch erkennen, ob der betreffende zugehörige Prozessschlüssel für sie, respektive den Hersteller bestimmt ist oder nicht.

Der Prozessschlüssel kann zudem zumindest ein Sicherheitselement umfassen, welches der Entschlüsselung der im Steuerelement-Bereich abgespeicherten Informationen und/oder des Uniform Resource Identifier dient.

Die Identifikationsmittel gemäss der vorliegenden Erfindung sind vorzugsweise als maschinenlesbarer zweidimensionaler- oder Matrix-Barcode oder als RFID-Tag ausgebildet, wobei sie besonders bevorzugt durch einen Druckprozess direkt auf ein Hauptprodukt gedruckt oder in einem Datenspeicherprozess in einem auf dem Hauptprodukt angebrachten RFID gespeichert werden.

Die vorliegende Erfindung erlaubt es, dass im Herstellungsprozess mindestens zwei Maschinen an getrennten Standorten beteiligt sind. Die Vorteile, die sich daraus ergeben sind in allgemeiner Form im Folgenden noch genauer dargelegt.

In einer bevorzugten Ausführungsform der vorliegenden Erfindung wird im Verlauf einer Förderstrecke dem Hauptprodukt mindestens ein Teilprodukt zugegeben.

Die Förderstrecke umfasst mindestens eine Förderanlage zum Fördern des Hauptprodukts. Entlang der Förderanlage sind Maschinen angeordnet, um das Hauptprodukt mit einem oder mehreren Teilprodukten zu versehen und eine Produktzusammenstellung zu bilden.

Gemäss einer Ausführungsform des erfindungsgemässen Verfahrens umfasst die Produktzusammenstellung ein Druckprodukt, welches sich vorzugsweise aus einem Hauptprodukt und einem oder mehreren Teilprodukten zusammensetzt.

In einer Variante ist die Förderanlage zur Förderung von Druckprodukten eingerichtet. Die entlang der Förderanlage angeordneten Maschinen sind eingerichtet, um den Druckprodukten die in Form von Haupt- und oder Teilprodukten vorliegen können eines oder mehrere Teilprodukte beizufügen. Bei den Druckprodukten kann es sich um Zeitungen, Wochenmagazine, Monatsmagazine, etc. handeln. Bei den Teilprodukten kann es sich zum Beispiel um Werbeprospekte, Produktblätter, Datenträger, Warenmuster etc. handeln.

In einer Variante ist die Förderanlage zur Förderung von Aufnahmebehältern eingerichtet. Die Aufnahmebehälter können in der Form von Plastikbehältern, Kartonbehältern, etc. oder als Kundentaschen ausgeführt sein, wobei die Behälter Kisten, Schachteln, Körbe und ähnliches umfassen. Die den Aufnahmebehältern beizufügenden Teilprodukte können Versandartikel wie Kleider, Lebensmittel, Elektronikartikel, Pharmazeutika, Versandartikel, Kundenartikel etc. betreffen. Die Produktzusammenstellung kann eine kundenspezifische Bestellung von Waren aller Art betreffen.

In einer weiteren Variante ist die Förderanlage speziell zur Förderung von Kundentaschen eingerichtet. Die entlang der Förderanlage angeordneten Maschinen sind eingerichtet, um den Kundentaschen ein oder mehrere Teilprodukte beizufügen. Bei den Kundentaschen kann es sich um Papiertaschen, Gewebetaschen, Plastiktaschen, etc. handeln.

Bei den Hauptprodukten kann es sich um fertige Produkte wie Konsumgüter, zum Beispiel elektrische Geräte oder Luxusartikel handeln. Gemäss weiteren Ausführungsformen können diese auch in unvollständiger Form vorliegen und allenfalls noch mit Teilprodukten ergänzt werden.

Bei den Teilprodukten kann es sich um Werbeartikel, Kundenartikel, Ergänzungen und Zubehör zu den Hauptprodukten, die wiederum auch fertige Produkte sein können, Verpackungsmaterial, Datenträger, Warenmuster etc. handeln.

Die Förderstrecke kann ein oder mehrfach unterbrochen sein, zum Beispiel durch Puffer oder Speicher. Sie ist auch unterbrochen, wenn ein Teil der Herstellung an einem ersten und ein weiterer Teil an einem zweiten Standort erfolgt.

Allgemein kann festgehalten werden, dass die vorliegende Erfindung die Segmentierung der Produktion, respektive des Verfahrens zur Herstellung einer Produktszusammenstellung ermöglicht, da kein zentrales übergeordnetes Steuersystem nötig ist, das aller relevanten Steueranweisungen für das jeweilige Produkt zur rechten Zeit an die richtige Maschine geben muss. Mindestens ein Hauptprodukt oder mindestens ein oder mehrere Teilprodukte führen diese Steuer- oder Abfrageanweisungen mit sich und machen dadurch ein zentrales übergeordnetes Steuersystem unnötig.

Vorzugsweise wird gemäss der vorliegenden Erfindung eine Vielzahl von Hauptprodukten in einer Produktsequenz im Verlauf der Förderstrecke von der mindestens einen Maschine bearbeitet.

Die Uniform Resource Identifier (URI) umfassteinen Zeiger, der nicht erfindungsgemäss auf die maschinenlesbaren Daten selber, oder nicht erfindungsgemäss auf mindestens eine Maschine zeigt oder erfindungsgemäss auf mindestens eine über ein Datennetzwerk zugreifbare Steuerinformationsdatenbank zeigt.

Zum Durchführen der vorgenannten Verfahren wird gemäss der vorliegenden Erfindung ein geeignetes System zur Verfügung gestellt.

Gemäss der vorliegenden Erfindung können Produktzusammenstellungen in der Form von Druckprodukten hergestellt werden, wobei diese mindestens ein Hauptprodukt oder ein Teilprodukt mit maschinenlesbaren Daten umfassen, welche wiederum mindestens einen Prozessschlüssel umfassen, der mindestens einen Uniform Resource Identifier (URI) und einen Steuerelement-Bereich umfasst, wobei die maschinenlesbaren Daten vorzugsweise als maschinenlesbarer zweidimensionaler- oder Matrix-Barcode oder als RFID-Tag ausgebildet sind.

Die vorliegende Erfindung hat sich besonders vorteilhaft bei der Herstellung von vollständig oder teilweise individualisierten Produkten erwiesen. In der Druckweiterverarbeitung erlaubt sie eine sehr einfache und rationelle routengerechte Produktion von kunden- und/oder gebietsspezifischen Produkten.

In einer weiteren Ausführungsform werden Produktzusammenstellungen in Form von Aufnahmebehältern, vorzugsweise in Form von Kundentaschen, zusammengestellt, welche mindestens ein Hauptprodukt oder ein Teilprodukt mit maschinenlesbaren Daten umfassen, welche wiederum mindestens einen Prozessschlüssel umfassen, der mindestens einen Uniform Resource Identifier (URI) und einen Steuerelement-Bereich umfasst. Auch hier sind die maschinenlesbaren Daten vorzugsweise als maschinenlesbarer zweidimensionaler- oder Matrix-Barcode oder als RFID-Tag ausgebildet.

Allgemein gilt bei der segmentierten Produktion gemäss der vorliegenden Erfindung, dass die im Herstellungsprozess beteiligten Maschinen an getrennten Standorten aufgestellt sein können. So können Maschinen an einem ersten Standort für den Herstellungsprozess erforderliche Arbeitsschritte vornehmen. Die teilweise fertig gestellten Produktzusammenstellungen können vom ersten Standort an einen zweiten Standort transportiert werden, wobei Maschinen am zweiten Standort weitere für den Herstellungsprozess erforderliche Arbeitsschritte vornehmen. Der Herstellungsprozess kann so auf unterschiedliche Standorte verteilt werden. Dadurch können unterschiedlichste Maschinen für den Herstellungsprozess zur Anwendung kommen. Die Aufteilung auf verschiedene Standorte kann auch zur Verbesserung der Sicherheit dienen, um beispielsweise Kundendaten, welche für die Adressierung von Produktzusammenstellungen erforderlich sind, nicht als gesamten Datenbestand an einen einzelnen Standort herauszugeben, sondern an einzelnen Standorten nur gerade notwendige Datensätze zur Verfügung zu stellen, beispielsweise wie beschrieben unter Verwendung einer Steuerinformationsdatenbank.

Die Steuerinformationsdatenbank kann grundsätzlich als verteilte Datenbank in einer "Cloud" aufgebaut und zugreifbar sein. Dadurch lässt sich insbesondere eine hohe Verfügbarkeit von Steuerinformationsdaten erreichen. Die in der Steuerinformationsdatenbank gespeicherten Daten lassen sich kurzfristig anpassen und Arbeitsschritte im Herstellungsprozess, welche sich auf Daten der Steuerinformationsdatenbank beziehen, kurzfristig ändern, beispielsweise um im Falle von Druckprodukten eine einer Tagesaktualität angepasste Beilage beizufügen. Dazu ist keine Kontaktnahme zum Standort erforderlich, bei welchem der Herstellungsprozess für die Herstellung einer Produktzusammenstellung gerade abläuft. Beispielsweise kann ein Grossauftrag in mehrere parallele Herstellungsprozesse aufgeteilt worden sein. Eine Kontaktnahme mit den einzelnen Standorten zur Änderung der Arbeitsschritte wäre zeitaufwendig und kompliziert.

Die Steuerinformationsdatenbank kann über das Internet mit Zugriff über den Uniform Resource Identifier URI verfügbar sein, wobei der Informationsfluss in beide Richtungen möglich ist. Es können auf diesem Weg Daten abgefragt aber auch in der Datenbank abgespeichert werden.

Für den Zugriff auf die Steuerinformationsdatenbank können eine Authentifizierung und/oder eine Verschlüsselung vorgesehen sein, welche beispielsweise pro Standort, pro Maschinenklasse, pro Maschine, etc. definiert sein können.

Durch den Zugriff über das Internet wird eine einfache und hohe Verfügbarkeit der Steuerinformationen für unterschiedlichste Standorte ermöglicht. Zugleich kann die Datensicherheit für jeden Prozessschlüssel einzeln und somit sehr detailliert festgelegt werden.

Es können mehrere Steuerinformationsdatenbanken vorgesehen sein, um Erfordernisse wie Verfügbarkeit, Skalierbarkeit, Sicherheit, etc. noch besser zu erfüllen.

Die maschinenlesbaren Daten können in einer Variante direkt am Hauptprodukt oder Teilprodukt, also direkt an einem Druckprodukt oder an einer Kundentasche, angebracht sein, beispielsweise dem Hauptprodukt oder Teilprodukt aufgeklebt, aufgedruckt, davon eingeschlossen, etc. sein.

Die maschinenlesbaren Daten können in einer Variante dem Hauptprodukt oder Teilprodukt, also einem Druckprodukt oder einer Kundentasche, lösbar, temporär und räumlich in unmittelbarer Nähe zugeordnet sein, beispielsweise an einer Klammer, einem Greifer, einer Transportvorrichtung, etc. zum Fördern des Hauptprodukts oder Teilprodukts angebracht sein. Während dem Fördern des Hauptprodukts oder Teilprodukts ist dieses den maschinenlesbaren Daten zugeordnet. Nach dem Fördern durch eine Fördervorrichtung wird diese Zuordnung aufgelöst.

Maschinenlesbare Daten können sowohl am Hauptprodukt oder Teilprodukt angebracht sein und diesem in unmittelbarer Nähe zugeordnet sein.

Die maschinenlesbaren Daten können auf dem Hauptprodukt oder Teilprodukt in der Form eines Barcodes oder zweidimensionalen Codes angebracht sein, beispielsweise als EAN Strichcode (EAN: European Article Number), als UPC Strichcode (UPC: Universal Product Code), als QR-Code (QR: Quick Response), als Aztec-Code, etc.

Die maschinenlesbaren Daten können auf dem Hauptprodukt oder Teilprodukt in der Form eines RFID-Tag angebracht sein (RFID: Radio Frequency Identification). Es kann ein passiver oder aktiver RFID-Tag vorgesehen sein, welcher nur lesbar, nur schreibbar oder sowohl lesbar als auch schreibbar ausgeführt sein kann. Durch das Schreiben von Daten können Maschinen Parameter des vorgenommenen Arbeitsschrittes festhalten, beispielsweise die Toleranz mit welcher ein bestimmter Arbeitsschritt vorgenommen wurde. Aufgrund der festgehaltenen Daten können nachfolgende Maschinen die nachfolgenden Arbeitsschritte optimieren, beispielsweise das Bedrucken mit einer Adresse unter Berücksichtigung der Toleranz, mit welcher ein Hauptprodukt oder Teilprodukt in einem vorgängigen Arbeitsschritt beschnitten wurde.

Der Herstellungsprozess für das Herstellen einer Produktzusammenstellung kann Anwendung finden im Bereich von Hochleistungsmaschinen, welche beispielsweise pro Stunde mehrere Hundert, Tausend, Zehntausend, etc. Produktzusammenstellungen vornehmen.

Der Herstellungsprozess für das Herstellen einer Produktzusammenstellung kann Anwendung finden im Bereich der Lagerbewirtschaftung und Logistik, wobei aus mehreren Artikel eine Produktzusammenstellung gebildet wird, beispielsweise gemäss einer Kundenbestellung. Eine solche kundenspezifische Produktzusammenstellung kann auch zur Produktion eines Gutes in kundenspezifischer Ausstattung genutzt werden, sofern ein kundenspezifischer Auftrag dafür vorliegt.

Nicht erfindungsgemäss umfasst der Uniform Resource Identifier URI einen Zeiger, der auf die maschinenlesbaren Daten selber zeigt. Dadurch lässt sich zum Beispiel die Produktionssicherheit erhöhen. Es kann auch der Produktstatus nach einem Bearbeitungsschritt geändert werden, indem die entsprechende Information an die Steuerinformationsdatenbank übermittelt und in ihr dem URI zugeordnet wird. Es können auch während des Produktionsprozesses die Daten zu einer URI jederzeit abgefragt werden. Sollte die Produktionsplanung kurzfristig umgestellt werden, so genügt es die entsprechenden Eigenschaften zu einer URI zu ändern. Die Produktion wird dadurch sehr flexibel und kann jederzeit zum Beispiel an geänderte Kundenwünsche angepasst werden.

Nicht erfindundungsgemäss umfasst der Uniform Resource Identifier URI einen Zeiger, der auf mindestens eine Maschine zeigt. Die Maschine kann eine Steuerinformationsdatenbank aufweisen, auf welche über den Uniform Resource Identifier URI zugegriffen werden kann.

Erfindundungsgemäss umfasst der Uniform Resource Identifier URI einen Zeiger, der auf mindestens eine über ein Datennetzwerk zugreifbare Steuerinformationsdatenbank zeigt. Die Steuerinformationsdatenbank kann auf einem über das Internet zugreifbaren Server verfügbar sein, auf welchen über den Uniform Resource Identifier URI zugegriffen werden kann und über welchen Informationen ausgetauscht werden können.

**Kurze Beschreibung der Zeichnungen**

Anhand von Figuren, welche lediglich Ausführungsbeispiele darstellen, wird die Erfindung im Folgenden erläutert. Es zeigen:

Fig. 1    einen erfindungsgemässen Prozessschlüssel umfassend einen Uniform Resource Identifier (URI) und einen Steuerelement-Bereich;

Fig. 2    einen erfindungsgemässen Prozessschlüssel umfassend einen Metatag, einen Uniform Resource Identifier (URI) und einen Steuerelement-Bereich;

Fig. 3    einen erfindungsgemässen Prozessschlüssel umfassend einen Metatag, einen Uniform Resource Identifier (URI), einen Steuerelement-Bereich und einen Schlüsselbereich;

Fig. 4    eine Anordnung mit mehreren erfindungsgemässen Prozessschlüssel n jeweils umfassend einen Metatag, einen Uniform Resource Identifier (URI), einen Steuerelement-Bereich und einen Schlüsselbereich;

Fig. 5    einen erfindungsgemässen Prozessschlüssel im Zusammenwirken mit Maschinen zur Herstellung einer Produktzusammenstellung; und

Fig. 6    einen erfindungsgemässen Prozessschlüssel im Zusammenwirken mit Maschinen zur Herstellung einer Produktzusammenstellung sowie das Zusammenwirken einer Maschine mit einer Datencloud.

**Weg(e) zur Ausführung der Erfindung**

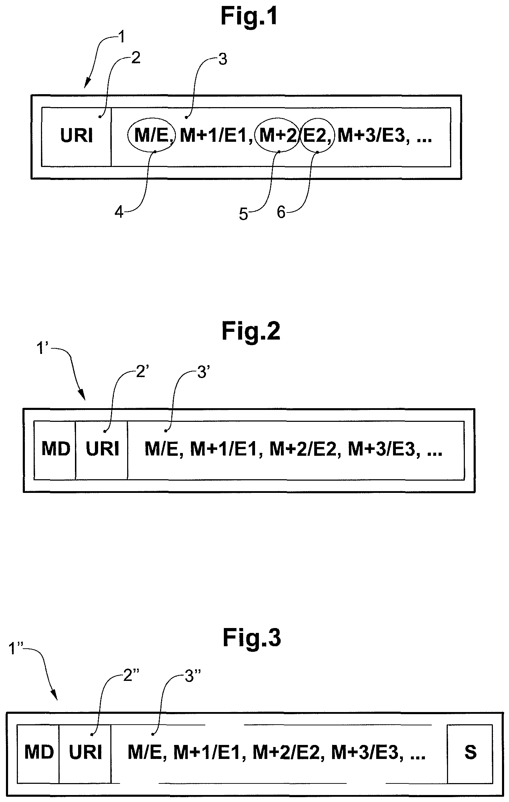

Figur 1 zeigt einen erfindungsgemässen Prozessschlüssel 1. Der Prozessschlüssel 1 umfasst einen Uniform Resource Identifier (URI) 2 und einen SteuerelementBereich 3.

Der Uniform Resource Identifier 2 ist nach bekanntem Schema wie folgt aufgebaut:

$$\text{URI} = \text{scheme ":" hier-part [ "?" query ] [ "#" fragment ]}$$

Die Komponenten des Uniform Resource Identifier 2 sind im folgenden Beispiel aufgeführt.
foo://example.com:8042/over/there?name=ferret#nose

Die Resource umfasst ein Scheme, welches den Kontext definiert und den Typ des URI bezeichnet. Bekannte Scheme sind beispielsweise die Protokolle http und ftp. Direkt darauf folgen ein Doppelpunkt und ein Pfad zur Verortung der Ressource.

Der Pfad umfasst eine Authority (also z.B. example.com:8042), einen Path (also z.B. /over/there), eine Query (also z.B. ?name=ferret) und ein Fragment (also z.B. #nose).

Die Authority kann einen Host bezeichnen und kann Benutzerangaben enthalten. Der Path enthält Angaben, die eine Resource identifizieren. Die Query beinhaltet Daten zur Identifizierung von Resourcen, welche durch die Angabe des Path nicht genau verortet werden können. Das Fragment referenziert eine Stelle innerhalb einer Resource.

Der Steuerelement-Bereich 3 umfasst beispielsweise eine Liste mit Paaren betreffend Maschinenidentifikationen M, 4, 5 und Maschinensteueranweisungen E, 6.

Die Maschinenidentifikationen M, 4, 5 können Maschinenklassen oder bestimmte Maschinen bezeichnen, wie beispielsweise eine Einsteckmaschine zum Einstecken von Teilprodukten in ein Hauptprodukt, eine Foliermaschine zum Folieren einer Produktzusammenstellung, eine Adressiermaschine zum Adressieren einer Produktzusammenstellung, etc.

Die Maschinensteueranweisungen 6 können Arbeitsschritte bezeichnen die von einer Maschine einer Maschinenklasse oder von einer bestimmten Maschine auszuführen sind, wie beispielsweise das Einstecken eines konkreten Teilprodukts an einer bestimmten Stelle des Hauptprodukts, das Folieren einer Produktzusammenstellung mit einer durchsichtigen, halbdurchsichtigen oder undurchsichtigen Folie, das Adressieren einer Produktzusammenstellung mit einer bestimmten Adresse, etc.

Bei der Herstellung einer Produktzusammenstellung umfassend ein Hauptprodukt und mehrere Teilprodukte ist das Hauptprodukt oder ein Teilprodukt als führendes Objekt mit maschinenlesbaren Daten versehen, welche den Prozessschlüssel 1 umfassen. Für die bei der Herstellung von Produktzusammenstellungen beteiligten Maschinen ist der Prozessschlüssel 1 erkennbar, wobei jeweils eine Maschine auf den Prozessschlüssel 1 zugreift und ein im Prozessschlüssel definierter Arbeitsschritt ausgelöst wird.

Da das Hauptprodukt oder Teilprodukt mit dem Prozessschlüssel 1 versehen ist, kann in einer Variante die Herstellung der Produktzusammenstellung nur durch den Prozessschlüssel 1 allein definiert sein und ohne weiteren Zugriff auf externe Daten erfolgen. Dies ermöglicht einen besonders hohen Durchsatz bei der Herstellung von Produktzusammenstellungen, da der Zugriff auf externe Daten wegen der nötigen Zeit den Zugriff durchzuführen die Herstellung verlangsamen würde.

Da der Prozessschlüssel 1 einen Uniform Resource Identifier URI, 2 umfasst, können Arbeitsschritte zur Herstellung von Produktzusammenstellungen zur Laufzeit definiert werden. Beispielsweise kann zur Laufzeit bei einem Arbeitsschritt zum Anbringen einer Zustelladresse der Produktzusammenstellung die betreffende Adresse durch Zugriff auf Daten festgelegt werden, welche durch den Uniform Resource Identifier 2 definiert sind. Dies ermöglicht es die Datensicherheit zu verbessern, da beispielsweise nicht die gesamten Kundendatensätze an einem Herstellungsstandort verfügbar sein müssen, sondern nur die Kundendatensätze, welche für die Herstellung der aktuellen Produktzusammenstellung erforderlich sind.

Durch die Verwendung des Uniform Resource Identifier 2 lassen sich Arbeitsschritte zur Laufzeit definieren. Beispielsweise lässt es sich im Prozessschlüssel 1 vermerken, dass eine Folierung der Produktzusammenstellung erfolgen soll, wobei durch Zugriff auf durch den Uniform Resource Identifier 2 definierte Daten erst zur Laufzeit ermittelt wird, ob eine durchsichtige, halbdurchsichtige oder undurchsichtige Folierung vorzunehmen ist.

Figur 2 zeigt einen erfindungsgemässen Prozessschlüssel 1', wobei einem Uniform Resource Identifier 2' und einem Steuerelement-Bereich 3 ein Metatag MD vorangestellt ist. Der Metatag MD ermöglicht die herstellerspezifische Identifikation der weiteren Elemente des Prozessschlüssels. Durch den Zugriff auf den Metatag MD kann eine Maschine sehr rasch erkennen, ob der betreffende Prozessschlüssel 1' einen Uniform Resource Identifier 2' und einen Steuerelement-Bereich 3' umfasst, um einen Arbeitsschritt der Maschine auszulösen. Dadurch lässt sich der Durchsatz bei der Herstellung von Produktzusammenstellungen erhöhen.

Figur 3 zeigt einen erfindungsgemässen Prozessschlüssel 1 ", wobei Uniform Resource Identifier 2" und einem Steuerelement-Bereich 3" ein Sicherheitselement S nachgestellt ist. Das Sicherheitselement S dient der Entschlüsselung der im Steuerelement-Bereich 3" abgespeicherten Informationen und/oder des Uniform Resource Identifier 2". Das Sicherheitselement kann einen Verschlüsselungsalgorithmus definieren, welcher zur Entschlüsselung erforderlich ist, beispielsweise ein symmetrischer Algorithmus oder ein asymmetrischer Algorithmus. Der zur Entschlüsselung notwendige Schlüssel, beispielsweise ein symmetrischer Schlüssel oder der private key eines asymmetrischen Schlüssels, kann in der betreffenden Maschine in einem Initialisierungsschritt abgespeichert worden sein.

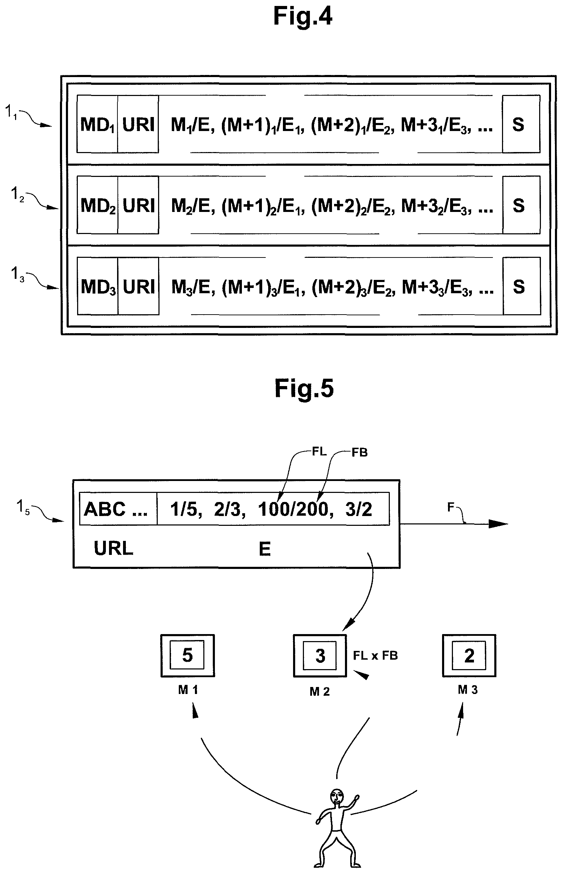

Figur 4 zeigt eine Vielzahl von Prozessschlüssel $1_1, 1_2, 1_3$, welche in den maschinenlesbaren Daten enthalten sind, mit welchen das Hauptprodukt oder das Teilprodukt versehen ist. In Figur 4 sind drei Prozessschlüssel $1_1, 1_2, 1_3$ gezeigt, es können aber weniger oder viel mehr Prozessschlüssel in den maschinenlesbaren Daten enthalten sein.

Durch die mehreren Prozessschlüssel $1_1$, $1_2$, $1_3$ können pro Maschine oder Maschinenklasse Arbeitsschritte definiert werden, welche von der betreffenden Maschine oder einer Maschine einer Maschinenklasse durchzuführen sind. Insbesondere durch Zugriff auf den Metatag $MD_1$, $MD_2$, $MD_3$ kann die jeweilige Maschine rasch feststellen, ob im Prozessschlüssel $1_1$, $1_2$, $1_3$ Arbeitsschritte definiert sind, die auszuführen sind.

Figur 5 zeigt einen Prozessschlüssel $1_5$, welcher in maschinenlesbaren Daten enthalten ist, mit welchen ein Hauptprodukt oder Teilprodukt versehen ist, das in einer Förderrichtung von einer Maschine M1, zu einer Maschine M2 und zu einer Maschine M3 gefördert wird. Wie in Figur 5 schematisch dargestellt ist, umfasst der Prozessschlüssel eine URL (Unified Resource Locator) mit dem Wert ABC ... und Eigenschaften E mit den Werten 1/5, 2/3, 100/200, 3/2. Wie in Figur 5 schematisch dargestellt, bezieht sich die Eigenschaft 1/5 auf die Maschine M1, mit welcher der Arbeitsschritt 5 durchzuführen ist. Der Arbeitsschritt 5 kann auf der Maschine M1 definiert sein und sich beispielsweise auf das Hinzufügen eines bestimmten Teilprodukts beziehen. Wie in Figur 5 schematisch dargestellt, bezieht sich die Eigenschaft 2/3 auf die Maschine M2, mit welcher der Arbeitsschritt 3 durchzuführen ist, welcher im Beispiel der Figur 5 eine Schneidefunktion auf eine bestimmte Grösse FL x FB betrifft. Wie in Figur M5 schematisch dargestellt, ist die Grösse FL x FB auf welche die Beschneidung durchzuführen ist, in den Eigenschaften nachzuschlagen. Im Beispiel der Figur 5 beträgt die Grösse FL $\times$ FB = 100 x 200 einer bestimmten Einheit, welche für die Maschine M2 Anwendung findet, beispielsweise die Einheit cm. Wie in Figur 5 schematisch dargestellt, bezeiht sich die Eigenschaft 3/2 auf die Maschine M3, mit welcher der Arbeitsschritt 2 durchzuführen ist. Der Arbeitsschritt 2 der Maschine M3 kann beispielsweise das Einstecken eines bestimmten Teilprodukts betreffen oder das Folieren mit einer durchsichtigen, halbdurchsichtigen oder undurchsichtigen Folie.

Der in der Figur 5 schematisch dargestellte Operateur kann, gemäss der strichliniert eingezeichneten Pfeile, optional bei den Maschinen eingreifen, Daten abfragen oder auszuführende Bearbeitungsschritte kontrollieren.

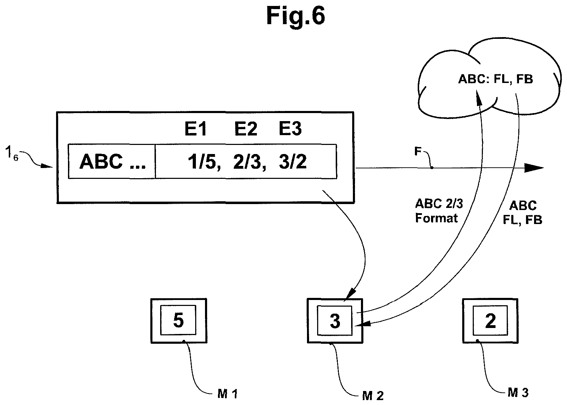

Figur 6 zeigt einen Prozessschlüssel $1_6$, welcher in maschinenlesbaren Daten enthalten ist, mit welchen ein Hauptprodukt oder Teilprodukt versehen ist, das in einer Förderrichtung von einer Maschine M1, zu einer Maschine M2 und zu einer Maschine M3 gefördert wird. Wie in Figur 6 schematisch dargestellt ist, umfasst der Prozessschlüssel eine URL mit dem Wert ABC ... und Eigenschaften E mit den Werten 1/5, 2/3, 3/2. Die Eigenschaften E1 mit den Werten 1/5 und E2 mit den Werten 3/2 beziehen sich auf die Maschine M1 und die Maschine M3, welche den Arbeitsschritt 5 und den Arbeitsschritt 2 durchzuführen haben. Die Eigenschaft E2 mit den Werten 2/3 bezieht sich auf die Maschine M2, welche den Arbeitsschritt 3 durchzuführen hat. Im in Figur 6 gezeigten Beispiel erfordert der Arbeitsschritt 3 zusätzliche Angaben, beispielsweise die Grössenangabe des Beschneidens eines Hauptprodukts oder Teilprodukts. Wie in Figur 6 dargestellt, löst die Maschine M2 unter Verwendung der URL ABC ... eine Abfrage in einer als "Cloud" dargestellten Steuerinformationsdatenbank durch, um die benötigten Angaben betreffend die Grössenangabe FL, FB abzurufen, welche erforderlich ist, um die Beschneidung durchzuführen.

## Patentansprüche

1. Verfahren zur Herstellung einer Produktzusammenstellung umfassend mindestens ein Hauptprodukt und mindestens ein oder mehrere Teilprodukte, wobei

    das Hauptprodukt oder ein Teilprodukt als führendes Objekt mit maschinenlesbaren Daten versehen wird, welche einen Prozessschlüssel (1) umfassen, der mindestens einen Uniform Resource Identifier (URI, 2) und einen Steuerelement-Bereich (3) umfasst,
    im Herstellungsprozess mindestens eine Maschine den Prozessschlüssel (1) erkennt,
    ein Arbeitsschritt der Maschine zur Herstellung der Produktzusammenstellung vom Prozessschlüssel (1) ausgelöst wird, und
    der Arbeitsschritt zur Laufzeit definiert wird, durch Zugriff auf Daten, welche durch den Uniform Ressource Identifier definiert sind, wobei der Uniform Ressource Identifier einen Zeiger umfasst, der auf mindestens eine über ein Datennetzwerk zugreifbare Steuerinformationsdatenbank zeigt.

2. Verfahren gemäss Anspruch 1, **dadurch gekennzeichnet, dass** die Produktzusammenstellung ein Druckprodukt umfasst, welches sich vorzugsweise aus einem Hauptprodukt und einem oder mehreren Teilprodukten zusammensetzt, oder dass die Produktzusammenstellung eine Kundentasche, zur Aufnahme einer kundenspezifischen Produktzusammenstellung umfasst.

3. Verfahren gemäss einem der Ansprüche 1 bis 2, **dadurch gekennzeichnet, dass** ein Arbeitsschritt der Maschine durch eine vom Steuerelement-Bereich (3) zur Verfügung gestellte Steuerinformation (4) ausgelöst wird.

4. Verfahren gemäss Anspruch 3, **dadurch gekennzeichnet, dass** die Steuerinformation (4) im Steuerelement-Bereich (3) des Prozessschlüssels (1) abgespeichert ist, oder dass die Steuerinformation (4) entsprechend einer im Steuerelement-Bereich (3) des Prozessschlüssels (1) abgespeicherten Anweisung über ein Datennetzwerk aus mindestens einer Steuerinformationsdatenbank abgefragt wird.

5. Verfahren nach einem der vorhergehenden Ansprüche 1 bis 4, **dadurch gekennzeichnet, dass** der Steuerelementbereich (3) mindestens ein maschinenspezifisches Steuerelement (4) mit einer Maschinenidentifikation (M, 5) und einer der Maschine zugeordneten Maschinensteueranweisung (E, 6) umfasst, oder dass der Steuerelementbereich (3) mindestens ein maschinenspezifisches Steuerelement (4) mit einer Maschinenidentifikation (M, 5) und einer der Maschine zugeordneten Abfrageanweisung für eine Maschinensteueranweisung umfasst.

6. Verfahren nach einem der vorhergehenden Ansprüche, **dadurch gekennzeichnet, dass** die maschinenlesbaren Daten ausgewählt sind aus der Gruppe von: i) direkt auf dem oder am Druckprodukt angebrachte maschinenlesbare Daten und ii) dem Druckprodukt lösbar, temporär und räumlich in unmittelbarer Nähe zugeordnete maschinenlesbare Daten.

7. Verfahren nach einem der vorhergehenden Ansprüche, **dadurch gekennzeichnet, dass** der Prozessschlüssel (1) ein vorangestelltes Metatag (MD) zur herstellerspezifischen Identifikation der weiteren Elemente des Prozessschlüssels umfasst, und/oder dass der Prozessschlüssel ein Sicherheitselement (S) umfasst, welches der Entschlüsselung der im Steuerelement-Bereich (3) abgespeicherten Informationen und/oder des Uniform Resource Identifier (URI, 2) dient.

8. Verfahren nach einem der vorhergehenden Ansprüche, **dadurch gekennzeichnet, dass** die maschinenlesbaren Daten als maschinenlesbarer zweidimensionaleroder Matrix-Barcode ausgebildet sind oder in einem RFID-Tag abgespeichert sind.

9. Verfahren nach Anspruch 8, **dadurch gekennzeichnet, dass** die maschinenlesbaren Daten in einem Druckprozess direkt auf ein Hauptprodukt oder Teilprodukt gedruckt oder in einem Datenspeicherprozess in einem RFID-Tag abgespeichert werden, welches am Hauptprodukt oder Teilprodukt angebracht ist.

10. Verfahren nach einem der vorhergehenden Ansprüche, **dadurch gekennzeichnet, dass** im Herstellungsprozess mindestens zwei Maschinen an getrennten Standorten beteiligt sind.

11. Verfahren nach einem der vorhergehenden Ansprüche, **dadurch gekennzeichnet, dass** im Verlauf einer Förderstrecke dem Hauptprodukt mindestens ein Teilprodukt zugegeben wird.

12. Verfahren nach einem der vorhergehenden Ansprüche, **dadurch gekennzeichnet, dass** eine Vielzahl von Hauptprodukten in einer Produktsequenz im Verlauf der Förderstrecke von der mindestens einen Maschine bearbeitet wird.

13. System zum Durchführen eines Verfahrens zur Herstellung einer Produktzusammenstellung umfassend mindestens ein Hauptprodukt und ein oder mehrere Teilprodukte, gemäss einem der vorgenannten Ansprüche, mit mindestens einem Hauptprodukt, einem oder mehreren Teilprodukten, einer Förderstrecke mit mindestens einer Förderanlage zum Fördern des Hauptprodukts, und mindestens einer Maschine zum Beifügen eines Teilprodukts zum Hauptprodukt oder zum Bearbeiten des Hauptprodukts,

wobei ein Hauptprodukt oder eines der Teilprodukte als führendes Produkt ein maschinenlesbares Identifikationsmittel aufweist,
das Identifikationsmittel mindestens einen Prozessschlüssel (1) mit mindestens einem Uniform Resource Identifier (2) und einem Steuerelement-Bereich (3) umfasst, und
das System so ausgebildet ist, dass
mindestens eine Maschine im Herstellungsprozess den Prozessschlüssel erkennt und ein Arbeitsschritt der Maschine zur Herstellung der Produktzusammenstellung vom Prozessschlüssel ausgelöst wird, und
der Arbeitsschritt zur Laufzeit definiert wird, durch Zugriff auf Daten, welche durch den Uniform Ressource Identifier definiert sind, wobei der Uniform Ressource Identifier einen Zeiger umfasst, der auf mindestens eine über ein Datennetzwerk zugreifbare Steuerinformationsdatenbank zeigt.

14. Verwendung eines Aufnahmebehälters, vorzugsweise einer Kundentasche, oder eines Druckprodukts, in einem Verfahren nach einem der Ansprüche 1 bis 12 wobei der Aufnahmebehälter beziehungsweise das Druckprodukt mindestens ein Hauptprodukt oder Teilprodukt mit maschinenlesbaren Daten umfasst, welche mindestens einen Prozessschlüssel umfassen, der mindestens einen Uniform Resource Identifier (URI, 2) und einen Steuerelement-Bereich (3) umfasst, wobei der Uniform Ressource Identifier einen Zeiger umfasst, der auf mindestens eine über ein Datennetzwerk zugreifbare Steuerinformationsdatenbank zeigt, und wobei die maschinenlesbaren Daten vorzugsweise als maschinenlesbarer zweidimensionaler- oder Matrix-Barcode oder als RFID-Tag ausgebildet sind.

**Claims**

1. Method for producing a product compilation comprising at least one main product and at least one or more subproducts, wherein

   the main product or a subproduct as a leading object is provided with machine-readable data, which include a process key (1), which comprises at least one Uniform Resource Identifier (URI, 2) and a control element region (3),
   in the production process at least one machine recognizes the process key (1),
   a work step of the machine for producing the product compilation is triggered by the process key (1), and
   the work step is defined at runtime by accessing data defined by the Uniform Resource Identifier, wherein the Uniform Resource Identifier comprises a pointer pointing to at least one control information database accessible via a data network.

2. Method according to claim 1, **characterized in that** the product compilation comprises a printed product, which is preferably composed of a main product and one or more subproducts, or **in that** the product compilation comprises a shopping bag for receiving a customer-specific product compilation.

3. Method according to one of claims 1 to 2, **characterized in that** a work step of the machine is triggered by control information (4) provided by the control element region (3).

4. Method according to claim 3, **characterized in that** the control information (4) is stored in the control element region (3) of the process key (1), or **in that** the control information (4) is queried from at least one control information database via a data network in accordance with an instruction stored in the control element region (3) of the process key (1).

5. Method according to one of the preceding claims 1 to 4, **characterized in that** the control element region (3) comprises at least one machine-specific control element (4) with a machine identification (M, 5) and a machine control instruction (E, 6) assigned to the machine, or **in that** the control element region (3) comprises at least one machine-specific control element (4) with a machine identification (M, 5) and a query instruction that is assigned to the machine, for a machine control instruction.

6. Method according to one of the preceding claims, **characterized in that** the machine-readable data are selected from the group of: i) machine-readable data directly attached to or on the printed product, and ii) machine-readable data associated detachably, temporarily and spatially in the immediate proximity of the printed product.

7. Method according to one of the preceding claims, **characterized in that** the process key (1) comprises a preceding metatag (MD) for manufacturer-specific identification of the further elements of the process key, and/or **in that** the process key comprises a security element (S) which is used for decrypting the information stored in the control element region (3) and/or the Uniform Resource Identifier (URI, 2).

8. Method according to one of the preceding claims, **characterized in that** the machine-readable data are formed as a machine-readable two-dimensional or matrix barcode or are stored in an RFID tag.

9. Method according to claim 8, **characterized in that** the machine-readable data are printed directly onto a main product or subproduct in a printing process or are stored in a data storage process in an RFID tag, which is attached to the main product or subproduct.

10. Method according to one of the preceding claims, **characterized in that** at least two machines at separate locations are involved in the production process.

11. Method according to one of the preceding claims, **characterized in that** at least one subproduct is added to the main product in the course of a conveyor section.

12. Method according to one of the preceding claims, **characterized in that** a plurality of main products in a product sequence are processed in the course of the conveyor section by the at least one machine.

13. System for carrying out a method for the production of a product compilation comprising at least one main product and one or more subproducts, according to one of the above-mentioned claims, with at least one main product, one or more subproducts, a conveying section with at least one conveyor facility for conveying the main product, and at least one machine for adding a subproduct to the main product or for processing the main product,

wherein a main product or one of the subproducts as a leading product comprises a machine-readable identification means, the identification means comprises at least one process key (1) with at least one Uniform Resource Identifier (2) and a control element region (3), and
the system is adapted such that at least one machine in the production process recognizes the process key and a work step of the machine for producing the product compilation is triggered by the process key, and
the work step is defined at runtime, by accessing data defined by the Uniform Resource Identifier, wherein the Uniform Resource Identifier comprises a pointer pointing to at least one control information database accessible via a data network.

14. Use of a receptacle, preferably a shopping bag, or of a printed product, in a method according to one of the claims 1 to 12,
wherein the receptacle or the printed product, respectively, comprises at least one main product or subproduct with machine-readable data, which comprise at least one process key comprising at least one Uniform Resource Identifier (URI, 2) and a control element region (3), wherein the Uniform Resource Identifier comprises a pointer pointing to at least one control information database accessible via a data network, and wherein the machine-readable data are preferably formed as a machine-readable two-dimensional or matrix barcode or as an RFID tag.

## Revendications

1. Procédé de fabrication d'une composition de produits comprenant au moins un produit principal et au moins un ou plusieurs sous-produits,

le produit principal ou un sous-produit étant fourni en tant qu'objet conducteur comportant des données lisibles par machine, lesquelles comprennent une clé de processus (1) qui comprend au moins un identificateur de ressource uniforme (URI, 2) et une zone d'élément de commande (3),
au moins une machine reconnaissant la clé de processus (1) dans le processus de fabrication,
une étape de travail de la machine servant à fabriquer la composition de produits étant déclenchée par la clé de processus (1), et
l'étape de travail étant définie au moment de l'exécution en accédant à des données qui sont définies par l'identificateur de ressource uniforme, l'identificateur de ressource uniforme comprenant un pointeur qui pointe vers au moins une base de données d'informations de commande accessible par l'intermédiaire d'un réseau de données.

2. Procédé selon la revendication 1, **caractérisé en ce que** la composition de produits comprend un produit imprimé, lequel est de préférence constitué d'un produit principal et d'un ou plusieurs sous-produits, ou que la composition de produits comprend un sac client servant à recevoir une composition de produits spécifique au client.

3. Procédé selon l'une des revendications 1 à 2, **caractérisé en ce qu'**une étape de travail de la machine est déclenchée par des informations de commande (4) fournies par la zone d'élément de commande (3).

4. Procédé selon la revendication 3, **caractérisé en ce que** les informations de commande (4) sont stockées dans la zone d'élément de commande (3) de la clé de processus (1), ou que les informations de commande (4) sont interrogées, conformément à une instruction stockée dans la zone d'élément de commande (3) de la clé de processus (1), par l'intermédiaire d'un réseau de données à partir d'au moins une base de données d'informations de commande.

5. Procédé selon l'une des revendications précédentes 1 à 4, **caractérisé en ce que** la zone d'élément de commande (3) comprend au moins un élément de commande (4) spécifique à la machine et comportant une identification de machine (M, 5) et une instruction de commande de machine (E, 6) associée à la machine, ou que la zone d'élément de commande (3) comprend au moins un élément de commande (4) spécifique à la machine et comportant une identification de machine (M, 5) et une instruction d'interrogation associée à la machine et destinée à une instruction de commande de machine.

6. Procédé selon l'une des revendications précédentes, **caractérisé en ce que** les données lisibles par machine sont choisies dans le groupe des : i) données lisibles par machine attachées directement sur ou au produit imprimé et ii) données lisibles par machine associées au produit imprimé à proximité immédiate de manière amovible, temporaire et spatiale.

7. Procédé selon l'une des revendications précédentes, **caractérisé en ce que** la clé de processus (1) comprend une étiquette méta précédente (MD) servant à l'identification spécifique au fabricant des autres éléments de la clé de processus, et/ou que la clé de processus comprend un élément de sécurité (S) servant au déchiffrage des informations stockées dans la zone d'élément de commande (3) et/ou de l'identificateur de ressource uniforme (URI, 2).

8. Procédé selon l'une des revendications précédentes, **caractérisé en ce que** les données lisibles par machine sont configurées sous forme de code barres bidimensionnel ou matriciel lisible par machine ou sont stockées dans une étiquette RFID.

9. Procédé selon la revendication 8, **caractérisé en ce que** les données lisibles par machine sont imprimées directement sur un produit principal ou sur un sous-produit dans un processus d'impression ou sont stockées dans une étiquette RFID dans un processus de stockage de données, laquelle est attachée au produit principal ou au sous-produit.

10. Procédé selon l'une des revendications précédentes, **caractérisé en ce qu'**au moins deux machines à des emplacements distincts sont impliquées dans le processus de fabrication.

11. Procédé selon l'une des revendications précédentes, **caractérisé en ce qu'**au moins un sous-produit est ajouté au produit principal au cours d'une ligne de transport.

12. Procédé selon l'une des revendications précédentes, **caractérisé en ce qu'**une multitude de produits principaux machine dans une séquence de produits sont traités par l'au moins une au cours de la ligne de transport.

13. Système d'exécution d'un procédé de fabrication d'une composition de produits comprenant au moins un produit principal et un ou plusieurs sous-produits, selon l'une des revendications précédentes, comportant au moins un produit principal, un ou plusieurs sous-produits, une ligne de transport comportant au moins une installation de transport servant à transporter le produit principal, et au moins une machine servant à ajouter un sous-produit au produit principal ou à traiter le produit principal,

un produit principal ou l'un des sous-produits étant fourni en tant qu'objet conducteur présentant un moyen d'identification lisible par machine,
le moyen d'identification comprenant au moins une clé de processus (1) comportant au moins un identificateur de ressource uniforme (2) et une zone d'élément de commande (3), et
le système étant configuré de telle sorte qu'au moins une machine reconnaît la clé de processus dans le processus de fabrication et qu'une étape de travail de la machine servant à fabriquer la composition de produits est déclenchée par la clé de processus, et
l'étape de travail étant définie au moment de l'exécution en accédant à des données qui sont définies par l'identificateur de ressource uniforme, l'identificateur de ressource uniforme comprenant un pointeur qui pointe vers au moins une base de données d'informations de commande accessible par l'intermédiaire d'un réseau de données.

14. Utilisation d'un réceptacle, de préférence d'un sac client, ou d'un produit imprimé, dans un procédé selon l'une des revendications 1 à 12, le réceptacle ou le produit imprimé comprenant au moins un produit principal ou un sous-produit comportant des données lisibles par machine, lesquelles comprennent au moins une clé de processus qui comprend au moins un identificateur de ressource uniforme (URI, 2) et une zone d'élément de commande (3), l'identificateur de ressource uniforme comprenant un pointeur qui pointe vers au moins une base de données d'informations de commande accessible par l'intermédiaire d'un réseau de données, et les données lisibles par machine étant de préférence configurées sous la forme d'un code barres bidimensionnel ou matriciel lisible par machine ou d'une étiquette RFID.

# Fig.1

# Fig.2

# Fig.3

# Fig.4

| | | | |
|---|---|---|---|
| $MD_1$ | URI | $M_1/E$, $(M+1)_1/E_1$, $(M+2)_1/E_2$, $M+3_1/E_3$, ... | S |
| $MD_2$ | URI | $M_2/E$, $(M+1)_2/E_1$, $(M+2)_2/E_2$, $M+3_2/E_3$, ... | S |
| $MD_3$ | URI | $M_3/E$, $(M+1)_3/E_1$, $(M+2)_3/E_2$, $M+3_3/E_3$, ... | S |

# Fig.5

# Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1911583 A